Europäisches Patentamt

(19) European Patent Office

Office européen des brevets

(11) Veröffentlichungsnummer: **0 132 775**
**B1**

(12) **EUROPÄISCHE PATENTSCHRIFT**

(45) Veröffentlichungstag der Patentschrift:
**09.12.87**

(51) Int. Cl.⁴: **E 03 F 5/10,** F 16 K 31/30,
G 05 D 7/01

(21) Anmeldenummer: **84108461.9**

(22) Anmeldetag: **18.07.84**

(54) **Abflussmengenregler.**

(30) Priorität: **29.07.83 DE 3327404**
**17.05.84 DE 8415035 U**

(43) Veröffentlichungstag der Anmeldung:
**13.02.85 Patentblatt 85/7**

(45) Bekanntmachung des Hinweises auf die Patenterteilung:
**09.12.87 Patentblatt 87/50**

(84) Benannte Vertragsstaaten:
**AT BE CH DE FR GB IT LI LU NL SE**

(56) Entgegenhaltungen:
**EP - A - 0 108 378**
**DE - A - 2 523 942**
**DE - A - 3 007 035**
**US - A - 1 547 196**
**US - A - 2 431 640**

(73) Patentinhaber: **Steinhardt, Lothar, Dipl.-Ing.,**
**Panoramastrasse 44, D-6204 Taunusstein 2 (DE)**

(72) Erfinder: **Steinhardt, Lothar, Dipl.-Ing.,**
**Panoramastrasse 44, D-6204 Taunusstein 2 (DE)**

(74) Vertreter: **Quermann, Helmut, Dipl.-Ing.,**
**Postfach 6145 Gustav-Freytag-Strasse 25,**
**D-6200 Wiesbaden (DE)**

ACTORUM AG

## Beschreibung

Die Erfindung betrifft einen Abflussmengenregler für Flüssigkeits-Behälter, insbesondere für Regenrückhalteräume, mit einer Blende, die vor die Auslauföffnung geschwenkt und über Übertragungselemente mit einem Schwimmer bewegungsschlüssig verbunden ist.

Bei Regenrückhaltungen und anderen Speicherräumen wird die ablaufende Wassermenge im allgemeinen durch Veränderung der Querschnittsfläche des Auslaufes geregelt. Das Abblenden der Auslauföffnung darf jedoch nicht direkt proportional der Wasserhöhe erfolgen, sondern muss mit zunehmender Stauhöhe gesteuert werden in Richtung auf eine weniger rasche Abblendung.

Derartige Regler sind bekannt, beispielsweise aus der DE-A-2 523 942 und der DE-A-3 007 037. Bei beiden bekannten Vorrichtungen wird eine Drosselblende mittels eines sehr ausladenden bzw. sehr aufwendigen Gestänges vor die Auslauföffnung des Beckens geschwenkt, wobei die eine Kante der Drosselblende eine Steuerkurve darstellt. Das zweitgenannte Patent stellt eine Verbesserung des Antriebes für die im erstgenannten Patent geschützte Blende dar. Dieser Antrieb hat aber die Nachteile, dass er zwei feste und zusätzlich zwei bewegliche Lager beinhaltet und aus einer Hebeltechnik besteht, zwischen die sich Schmutzstoffe einklemmen und die Regeltätigkeit verhindern oder stark beeinträchtigen können. Die Gestänge sind bauartbedingt gegen solche Einflüsse nicht schützbar. Ausserdem ist die Steuerung konstruktionsbedingt immer nur einseitig verwendbar, das heisst, wenn der Schwimmer rechts von der Reglerachse angeordnet ist, kann er nur durch werkmässige spiegelbildliche Ausführung der Konstruktion auch links verwandt werden. Eine Serienfertigung für Links- und Rechtsausführungen ist nicht möglich. Ausserdem kann mit dieser Steuerung die auf- oder absteigende Schwimmerbewegung nur im direkten Verhältnis auf die Blende übertragen werden.

Ziel der vorliegenden Erfindung ist daher ein Abflussmengenregler, der die schwenkbare Reglerblende einfacher und schützbar mit geringerer Maschinentechnik und universell verwendbar antreibt und ausserdem durch Übersetzungen die Reglerblende den hydraulischen Erfordernissen angepasst gleichmässig oder schneller oder langsamer oder kombiniert bewegt. Gerade bei dem eingangs erwähnten sehr schnellen Abblenden bei erst langsam ansteigendem Wasserstau ist zur exakten Erreichung der Regelmenge eine schnellere Drehbewegung erforderlich, mit der gleichzeitig die grosse Ausklinkung der Blendenspitze auf ein Minimum reduziert oder gar vermieden werden kann. Der bei der Steuerung nach dem Patent DE-A-3 007 035 nicht exakt erfassbare und steuerbare Bereich der Einstauhöhen bis 2,5 × DR wird auf die hydraulisch berechenbare Grenze von 1,5 DR über Sohle herabgemindert. DR bedeutet Durchmesser der Regleröffnung.

Der neue Regler besteht im wesentlichen aus der bekannten und nunmehr optimierten Blende, die in vertikaler Richtung vor der Auslauföffnung geführt ist, und aus einer oberhalb der Blende auf einer ortsfesten Achse drehbar gelagerten Antriebs- und Steuereinheit. Die Bewegung des Schwimmers wird über ein Übertragungselement, beispielsweise über einen Schwimmerarm auf ein Antriebselement, beispielsweise eine Scheibe, auch Steuerscheibe, übertragen, die wiederum durch Seile, Ketten oder dergleichen mit einem Antriebselement auf der Blendenachse, beispielsweise eine Scheibe, auch Steuerscheibe, bewegungsschlüssig verbunden ist, die dann letztlich bewegungsschlüssig die erforderlichen Drehbewegungen der Blende bewirken. Alle Einheiten sind auf einer gemeinsamen Grundplatte montiert und bis auf den Schwimmer mit einarmigem Schwimmerarm und der Blende durch eine Abdeckung geschützt. Die beiden Drehachsen liegen vorzugsweise auf der Achse des Reglers.

Die Erfindung wird durch die Zeichnung erläutert, in welcher eine bevorzugte Ausführungsform dargestellt ist. Es zeigen:

Figur 1: einen erfindungsgemässen Abflussmengenregler in Ansicht,

Figur 2: den gleichen Regler im seitlichen Schnitt und

Figur 3: einen weiteren erfindungsgemässen Abflussmengenregler in Ansicht.

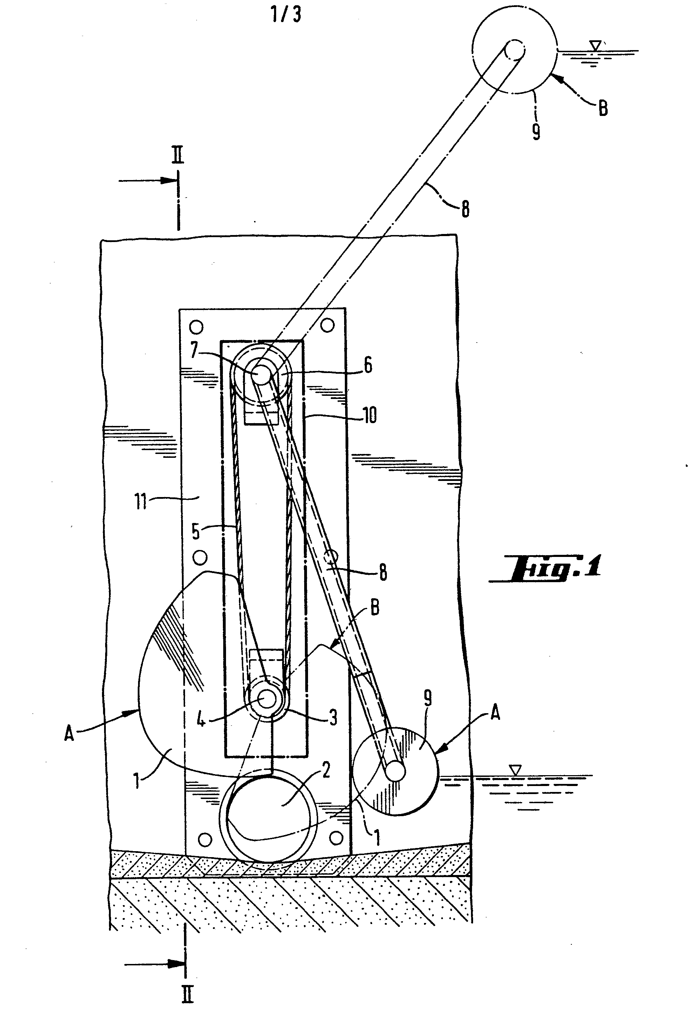

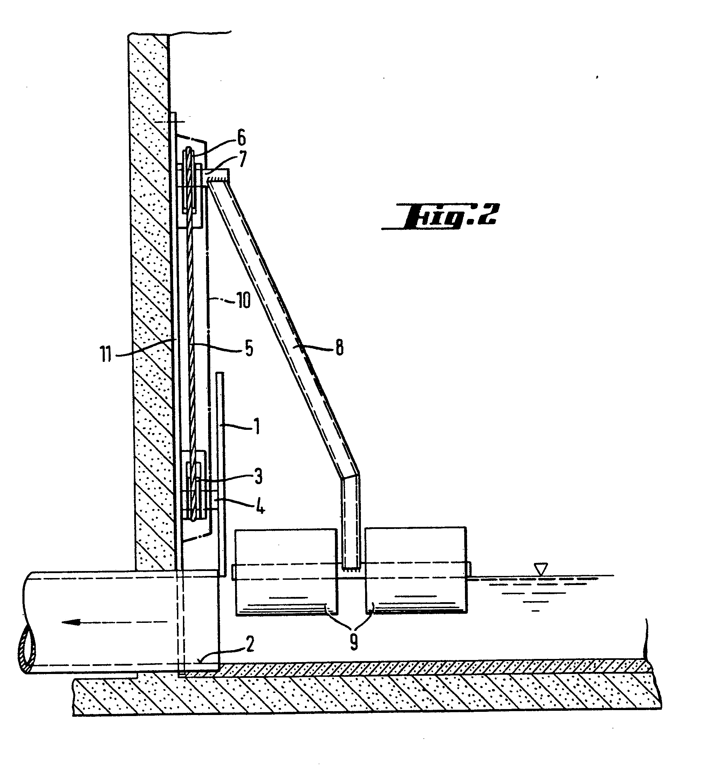

Wie die Fig. 1 und 2 erkennen lassen, besteht der Regler aus einer Blende 1, die über die Auslauföffnung 2 geführt und mit einer Antriebsscheibe 3 bewegungsschlüssig verbunden ist, die auf einer gemeinsamen ortsfesten Achse 4 drehbar gelagert sind. Das Seil 5 läuft über eine zweite Scheibe auch Steuerscheibe 6, die auf einer zweiten Drehachse 7 mit dem einarmigen Schwimmerarm 8 bewegungsschlüssig mit den Schwimmern 9 verbunden ist. Die Scheibe 6 weist einen grösseren Durchmesser als die Scheibe 3 auf. Durch diese Übersetzung wird ein schnelleres Abblenden der Auslauföffnung 2 erreicht. Die gegen Betriebsstörungen empfindlichen Antriebsteile werden durch die Schutzhaube 10 auf der gemeinsamen Grundplatte 11 gegen Verschmutzung etc. geschützt.

Die Grundplatte und die Schutzhaube können ein- oder mehrteilig ausgeführt werden.

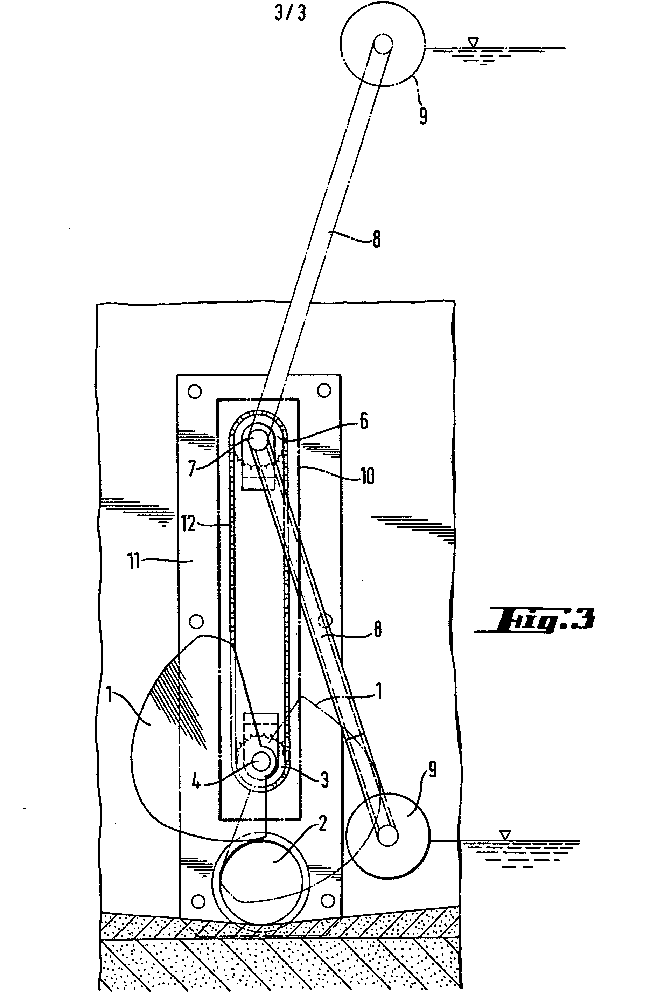

In Fig. 3 ist ein weiterer erfindungsgemässer Abflussmengenregler dargestellt, bei dem die Scheibe 6 den gleichen Durchmesser wie die Scheibe 3 aufweist. In diesem Ausführungsbeispiel sind die beiden Scheiben 3, 6 über eine Kette 12 miteinander verbunden.

In der Figur 1 ist der Schwimmerarm 8 in Form eines hohlen, abgedichteten Vierkantrohres dargestellt.

Zur Verdeutlichung des Einflusses dieses hohlen, schwimmfähigen Schwimmerarms 8 auf die Funktion des Abflussmengenreglers sind zwei mögliche Positionen A und B des Schwimmers 9 sowie der Blende 1 eingezeichnet.

In Position A ist die Auslauföffnung 2 vollständig geöffnet, die Blende 1 aus der Auslauföffnung nach oben herausgeschwenkt und der Schwimmer 9 mit dem Schwimmer 8 befindet sich in seiner untersten Stellung. Da die Blende 1 an ihrem Rand drehbar gelagert ist, wirkt auf die Blende aufgrund ihres Eigengewichtes eine nach unten gerichtete Kraft, die den Schwimmer nach oben drückt. Um die Blende in Position A zu halten, müssen der Schwimmer 9 und der Schwimmerarm 8 entsprechend schwergewichtig ausgebildet sein.

In Position B sind die Verhältnisse umgekehrt, da hier die Blende 1 auf der anderen Seite nach oben geschwenkt ist. Der Schwimmer muss jetzt eine entsprechend grosse nach oben gerichtete Kraft aufbringen. Um den hierzu nötigen Auftrieb zu erhalten, muss der Schwimmer in den bekannten Abflussmengenreglern entsprechend grossvolumig ausgeführt sein. Da der Schwimmerarm 8 als schwimmfähiger Hohlkörper ausgebildet ist, erfährt dieser, da er in Position B in die Flüssigkeit eintaucht, ebenfalls einen Auftrieb. Die Aufwärtsbewegung des Schwimmers 9 wird somit durch den Schwimmerarm 8 unterstützt, sobald dieser, ab seiner horizontalen Stellung aufwärts, in die Flüssigkeit eintaucht. Auf grossvolumige Schwimmer kann damit verzichtet werden.

### Patentansprüche

1. Abflussmengenregler für Ausläufe aus Flüssigkeitsbehältern, insbesondere Regenrückhalteräume, mit einer Blende (1), die vor die Auslauföffnung (2) geschwenkt und über Übertragungselemente mit einem Schwimmer (9) bewegungsschlüssig verbunden ist, dadurch gekennzeichnet, dass der Schwimmer (9) über einen Schwimmerarm (8) mit einer oberen, um eine gemeinsame ortsfeste Drehachse (7) drehbar gelagerten Scheibe (6) drehfest verbunden ist, die mittels Seilen mit einer unteren, um eine ortsfeste Drehachse (4) drehbar gelagerten Scheibe (3) bewegungsschlüssig verbunden ist, an welcher die Blende (1) drehfest angebracht ist.

2. Abflussmengenregler nach Anspruch 1, dadurch gekennzeichnet, dass die obere Scheibe (6) und die untere Scheibe (3) einen unterschiedlichen Durchmesser aufweisen.

3. Abflussmengenregler nach Anspruch 2, dadurch gekennzeichnet, dass die obere Scheibe (6) einen grösseren Durchmesser als die untere Scheibe (3) aufweist.

4. Abflussmengenregler nach Anspruch 1, dadurch gekennzeichnet, dass die obere Scheibe (6) und die untere Scheibe (3) den gleichen Durchmesser aufweisen.

5. Abflussmengenregler nach einem der Ansprüche 1 bis 4, dadurch gekennzeichnet, dass die ortsfesten Drehachsen (7) und (4) etwa vertikal übereinander angeordnet sind.

6. Abflussmengenregler nach einem der Ansprüche 1 bis 5, dadurch gekennzeichnet, dass die beiden Scheiben (6) und (3) sowie die sie verbindenden Seile unter einer Schutzhaube (10) angeordnet sind.

7. Abflussmengenregler nach einem der Ansprüche 1 bis 6, dadurch gekennzeichnet, dass dieser Schwimmerarm (8) als schwimmfähiger Hohlkörper ausgebildet ist.

8. Abflussmengenregler für Ausläufe aus Flüssigkeitsbehältern, insbesondere Regenrückhalteräume, mit einer Blende, die vor die Auslauföffnung geschwenkt und über Übertragungselemente mit einem Schwimmer bewegungsschlüssig verbunden ist, dadurch gekennzeichnet, dass der Schwimmer (9) über einen Schwimmerarm (8) mit einer oberen, um eine gemeinsame ortsfeste Drehachse (7) drehbar gelagerten Scheibe (6) drehfest verbunden ist, die mittels Ketten (12) mit einer unteren, um eine ortsfeste Drehachse (4) drehbar gelagerten Scheibe (3) bewegungsschlüssig verbunden ist, an welcher die Blende (1) drehfest angebracht ist.

### Revendications

1. Régulateur de débit pour des orifices de sortie de réservoirs de liquide, notamment de bacs de retenue d'eau de pluie, comportant un obturateur (1) qui pivote devant l'orifice de sortie (2) et est relié en déplacement par des éléments de transmission avec un flotteur (9), caractérisé en ce que le flotteur (9) est solidaire en rotation par l'intermédiaire d'un bras de flotteur (8) d'une poulie supérieure (6) pouvant tourner autour d'un axe de rotation fixe commun (7), laquelle poulie (6) est reliée en déplacement au moyen de câbles à une poulie inférieure (3) montée rotative autour d'un axe de rotation fixe (4), sur laquelle l'obturateur (1) est monté solidaire en rotation.

2. Régulateur de débit selon la revendication 1, caractérisé en ce que la poulie supérieure (6) et la poulie inférieure (3) ont un diamètre différent.

3. Régulateur de débit selon la revendication 2, caractérisé en ce que la poulie supérieure (6) a un plus grand diamètre que la poulie inférieure (3).

4. Régulateur de débit selon la revendication 1, caractérisé en ce que la poulie supérieure (6) et la poulie inférieure (3) ont le même diamètre.

5. Régulateur de débit selon l'une des revendications 1 à 4, caractérisé en ce que les axes de rotation fixes (7) et (4) sont disposés l'un au-dessus de l'autre sensiblement verticalement.

6. Régulateur de débit selon l'une des revendications 1 à 5, caractérisé en ce que les deux poulies (6) et (3), ainsi que les câbles qui les relient sont disposés sous un capot de protection (10).

7. Régulateur de débit selon l'une des revendications 1 à 6, caractérisé en ce que ce bras de flotteur (8) est réalisé sous forme de corps creux pouvant flotter.

8. Régulateur de débit pour des orifices de sortie de réservoirs de liquide, notamment de bassins de retenue d'eau de pluie, comportant un obturateur qui pivote devant l'orifice de sortie et est relié en déplacement à un flotteur par des éléments de transmission, caractérisé en ce que le flotteur (9) est solidaire en rotation, par l'intermédiaire d'un bras de flotteur (8), d'une poulie supérieure (6) montée rotative autour d'un axe de rotation commun fixe (7), laquelle poulie (6) est reliée en déplacement au moyen de chaînes (12) à une poulie inférieure (3) montée rotative autour d'une axe de rotation fixe (4), sur laquelle l'obturateur (1) est monté solidaire en rotation.

## Claims

1. A discharge regulator for outlets of liquid reservoirs, especially of rainwater retaining basins, having a pivoted regulator plate (1) in front of this outlet, this plate (1) being non-positively connected to a float (9) by mechanical transmission elements, characterized in that the float (9) is rigidly connected to an upper disc (6) through a float arm (8), this disc (6) and this float arm (8) being rotatably mounted on a common stationary axis (7), this disc (6) being non-positively connected by cables to a lower disc (3) rotatably mounted on a stationary axis (4), and this regulator plate (1) being rigidly connected to this rotating disc (3).

2. A discharge regulator according to claim 1, characterized in that this upper disc (6) and this lower disc (3) have a different diameter.

3. A discharge regulator according to claim 2, characterized in that this upper disc (6) has a greater diameter than this lower disc (3).

4. A discharge regulator according to claim 1, characterized in that this upper disc (6) and this lower disc (3) have the same diameter.

5. A discharge regulator according to one of the claims 1 to 4, characterized in that these stationary axes (7) and (4) are mounted more or less vertically one above the other.

6. A discharge regulator according to one of the claims 1 to 5, characterized in that these discs (6) and (3) as well as the cables connecting them are arranged under a protective cover (10).

7. A discharge regulator according to one of the claims 1 to 6, characterized in that this float arm (8) is constructed as a buoyant hollow body.

8. A discharge regulator for outlets of liquid reservoirs, especially of rainwater retaining basins, having a pivoted regulator plate (1) in front of this outlet, this plate (1) being non-positively connected to a float (9) by mechanical transmission elements, characterized in that the float (9) is rigidly connected to an upper disc (6) through a float arm (8), this disc (6) and this float arm (8) being rotatably mounted on a common stationary axis (7), this disc (6) being non-positively connected by chains to a lower disc (3) rotatably mounted on a stationary axis (4), and this regulator plate (1) being rigidly connected to this rotating disc (3).

**Fig.1**

_Fig.2_

Fig.3